# EUROPEAN PATENT SPECIFICATION

(11) **EP 1 967 350 B1**
(45) Date of publication and mention of the grant of the patent: **22.06.2016**
(21) Application number: 08003670.0
(22) Date of filing: 28.02.2008
(51) Int. Cl.: B29C 47/90, B29C 47/34

(54) **Guide device for extruded tubular plastic films**
Führungsvorrichtung für extrudierte röhrenförmige Plastikfolien
Dispositif de guide pour films plastiques tubulaires extrudés

(30) Priority: 06.03.2007 IT MI20070449
(43) Date of publication of application: 10.09.2008
(73) Proprietor: Sanplast Di Santoro Raimondo, 21052 Busto Arsizio (VA) (IT)
(72) Inventor: Santoro, Raimondo, 21010 Ferno (Varese) (IT)
(74) Representative: Petruzziello, Aldo

(56) References cited:
- EP-A1- 1 714 770
- DE-A1- 2 638 744
- US-A- 5 441 395

## Description

The present invention refers to a device (hereafter called "bubble guide") adapted to guide a tubular film of plastic, preferably extruded by the blown bubble system, during the cooling stage. Prior art guide devices for tubular plastic films are known from DE-A-2638744.

In the systems for the production of tubular films it is necessary (or at least highly advisable) to support and to guide the bubble of extruded film during the cooling stage.

A good quality extrusion system must allow the production of films that are very precise as regards their diameter and their thickness.

The bubble guide is an important part of such an extrusion system because it is situated in the immediate vicinity of the area of the bubble of extruded film in which the plastic material crystallises and where the sensors for checking the bubble of extruded film, which must be oriented precisely towards the centre of the bubble for a good reading, are generally positioned.

To support and to guide the film as the plastic material passes from the plastic state to the crystalline state, use is currently made of a roller cage system, normally consisting of an assembly of segments disposed on a plurality of planes (guide levels) and in a position tangential to the bubble of extruded film created by the blowing method.

The cage is made up of members, fixed to an external support, which move towards the centre with a mechanical system of levers, with a radial or angular movement (iris system: the levers have their fulcrum at the support and move towards the centre along an arc of a circle). The movement serves to vary the diameter of the opening defined by the rollers according to the diameter of the bubble of extruded film so as to maintain constant the support of said bubble.

The radial movement makes it possible to obtain the best results because it accompanies the bubble of extruded film with a support that is always at right angles to its centre, whereas the iris systems are always somewhat approximate, having a movement based on an angular movement.

The great majority of the bubble guides are nevertheless built with an iris system because it is simpler and less costly and the size of the bubble guide is limited.

According to the characteristics of the bubble of extruded film to be guided, the rollers are constructed of different materials to adapt to the different characteristics of the polymers and of the extrusion techniques used to form the bubble of extruded film.

The bubble guide is normally designed according to the type of guide required for a specific application: in the event of a change in the guide requirements, the modifications that have to be made to the bubble guide to pass to another guide method are very costly and (sometimes) impossible, so it is almost always preferred to change the bubble guide, with a consequent increase in the management costs and a decrease in the productivity of the extrusion line.

Furthermore, an extrusion line is increasingly frequently destined to produce film with different families of polymers and therefore with different guide requirements, which would need different types of bubble guide: since replacing the bubble guide when the extruded polymer changes is (generally) an impracticable choice for technical and economic reasons, some films are extruded with the bubble guide open to avoid a contact which would damage the quality of said film.

Object of the present invention is to overcome the limits and/or the drawbacks presented by the devices of the prior art for guiding the bubble of extruded film duping the cooling thereof.

This object is achieved by means of a guide device according to claim 1; further advantageous characteristics of the device form the subject matter of the dependent claims.

Further characteristics of the device will be made clearer by the detailed description that follows, referring to purely exemplifying and therefore non limiting embodiment thereof illustrated in the appended figures, wherein:
- Figure 1 shows diagrammatically a perspective view of a bubble guide bearing a single mobile arm;
- Figure 2 shows diagrammatically, enlarged, the detail designated by A in figure 1;
- Figure 3 shows diagrammatically, enlarged, another perspective view of a portion of the bubble guide of Figure 1;
- Figure 4 shows diagrammatically, enlarged, the detail designated by B in Figure 3;
- Figure 5 shows diagrammatically a top view of the bubble guide of Figure 1, with the mobile arm in various positions;
- Figure 6 shows diagrammatically an embodiment of the guide means;
- Figures 7 and 8 show diagrammatically a top view of a bubble guide bearing six mobile arms in a retracted position and in an extended position, respectively;
- Figure 9 shows diagrammatically a top view and a side view of the means for moving the bubble guide vertically.

In the appended figures like elements will be designated by the same reference numerals.

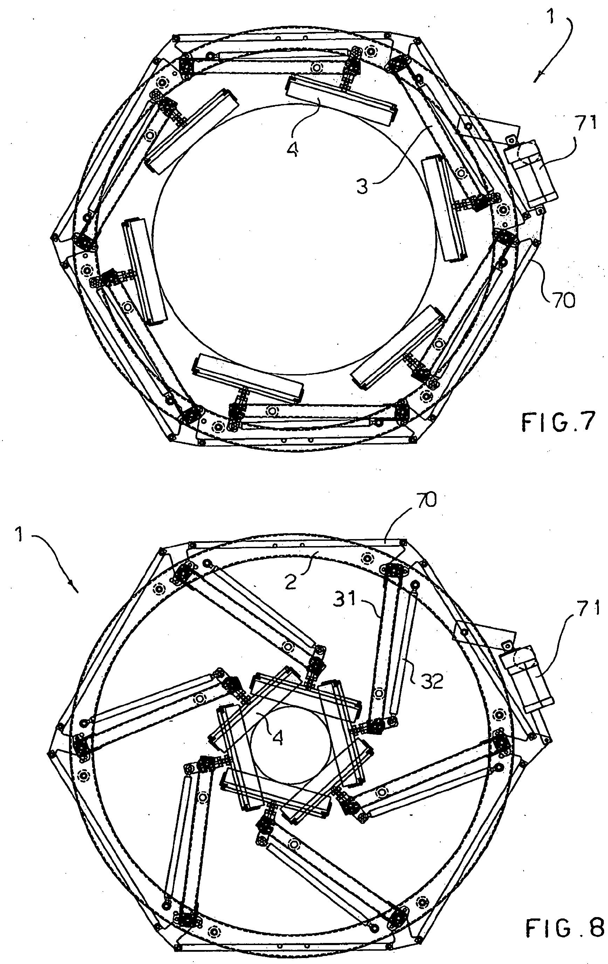

The present invention refers to a bubble guide for tubular plastic film comprising a supporting structure, to be mounted around the bubble of extruded film, to which is hinged one end of a plurality of mobile arms (six mobile arms in the non limiting embodiment shown in Figures 7 and 8) the second end of which, held in contact with the bubble of extruded film, bears bubble guide means.

Each mobile arm consists of an articulated quadrilateral and preferably comprises at least one quadrangular body (square or rectangular) having one side hinged flap-like to the supporting structure, a tie rod having one end hinged to the supporting structure and a member, hinged to the other end of the tie rod and to the side of the quadrangular body opposite that hinged to the supporting structure, which carries the guide means.

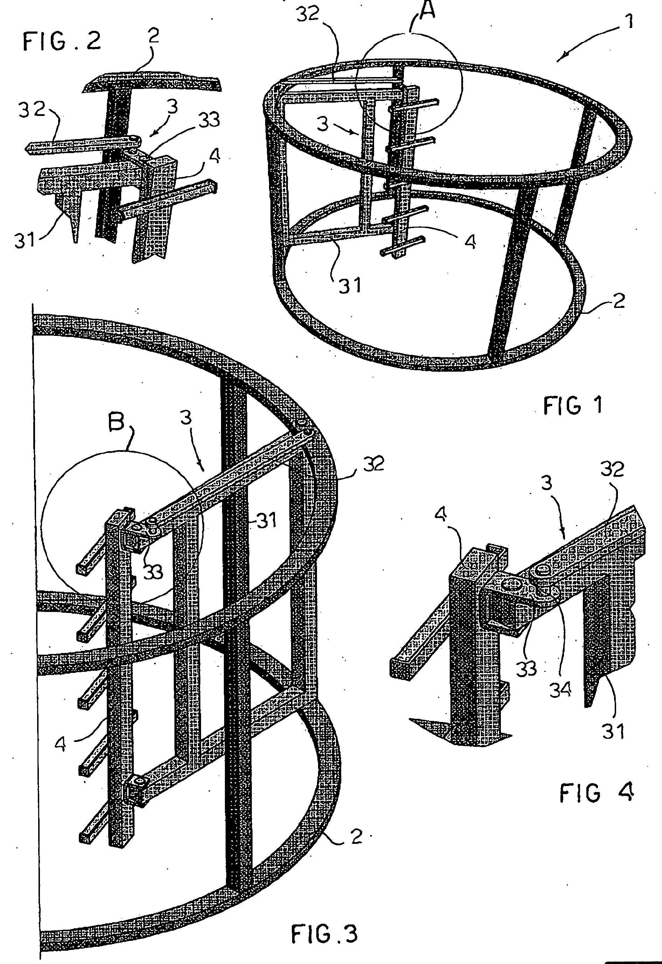

Figure 1 shows diagrammatically a perspective view of a bubble guide 1 equipped with a single mobile arm 3 bearing the guide means 4; in Figure 1 the other mobile arms 3 have been omitted to allow a clearer view of the structure of the mobile arm 3, which consists of an articulated quadrilateral comprising a quadrangular body (square or rectangular) 31 having one side hinged flap-like to the supporting structure 2, a tie rod 32 having one end hinged to the supporting structure 2 and a member 33 (Figure 2), hinged to the other end of the tie rod 32 and to the side of the body 31 opposite that hinged to the supporting structure 2, which carries (by means of reversible fixing means, not illustrated because they are per se known) the guide means 4.

As can be seen from Figures 1 and 3, the quadrangular body 31 has a height corresponding to that of the supporting structure 2.

The mobile arm 3 advantageously comprises means (not described herein because they are per se known) adapted to vary the length of the tie rod 32 to allow a fine adjustment of the position of the guide means 4 with respect to the bubble of extruded film.

As said previously, the bubble guides of the prior art normally consist of an assembly of guide bodies disposed on a plurality of planes (for example, on five planes): lever systems are known to the art which permit the simultaneous adjustment of the position of the guide bodies of each plane, but aligning (or trying to align) with each other the guide bodies belonging to the different planes, arranged parallel to the axis of the bubble guide, is a long, difficult and, consequently, costly operation.

In the bubble guide 1, the guide bodies 4 disposed parallel to the axis of the bubble guide are carried by the same flap-like body 31 and their position is adjusted simultaneously by moving the flap-like body 31; the adjustment of the bubble guide 1 is therefore considerably simpler and faster.

The bubble guide 1 makes it possible to combine the mechanical advantages of the iris movement with the greater precision of adjustment of the radial system.

Figure 2 shows diagrammatically, enlarged, the detail designated by A in Figure 1; in Figure 2, the ends of the flap-like structure 31 and of the tie rod 31, connected by the member 33, which make up the end of the mobile arm 3 that carries the guide means 4, can be seen better.

Figure 3 shows diagrammatically, enlarged, another perspective view of a portion of the bubble guide 1 of Figure 1, which shows the structure of the mobile arm 3 more clearly.

In Figure 3 the supporting structure 2, the arm 3 (comprising the flap-like structure 31 and the tie rod 32 connected by the member 33) and the guide means 4 carried by the arm 3 can be seen.

The parts making up the arm 3 can be seen better in Figure 4, which shows diagrammatically - enlarged - the detail designated by B in Figure 3.

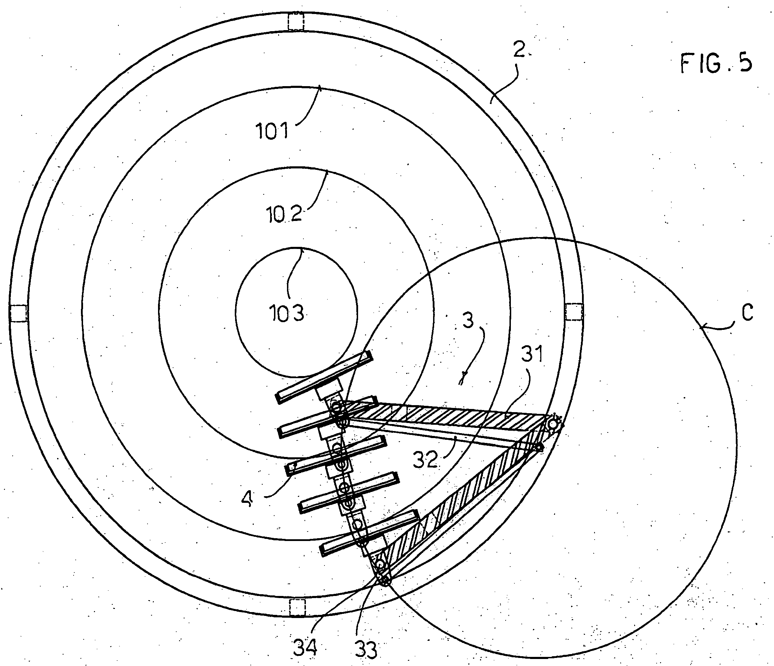

Figure 5 shows diagrammatically a top view of the bubble guide 1 of Figure 1 with the mobile arm 3 and the guide means 4 in various positions corresponding to different diameters of the bubble of extruded film; Figure 5 shows diagrammatically three bubbles having, respectively, the maximum diameter (bubble 101), the medium diameter (bubble 102) and the minimum diameter (bubble 103) foreseen for the bubble of extruded film guided by the bubble guide 1.

From Figure 5, it can be seen that the mobile arm 3 moves the guide means 4 parallel to themselves, always keeping them tangential to the bubble of extruded film, and that the pin 34 (or other functionally equivalent connecting means) that connects the tie rod 32 to the member 33 describes an arc of a circle C passing through the positions occupied by the pin 34 when the guide means 4 are tangential to a bubble of extruded film having, respectively, the maximum, medium and minimum diameters foreseen for the bubble of extruded film; the circle C has as its centre the end of the tie rod 32 hinged to the supporting structure 2.

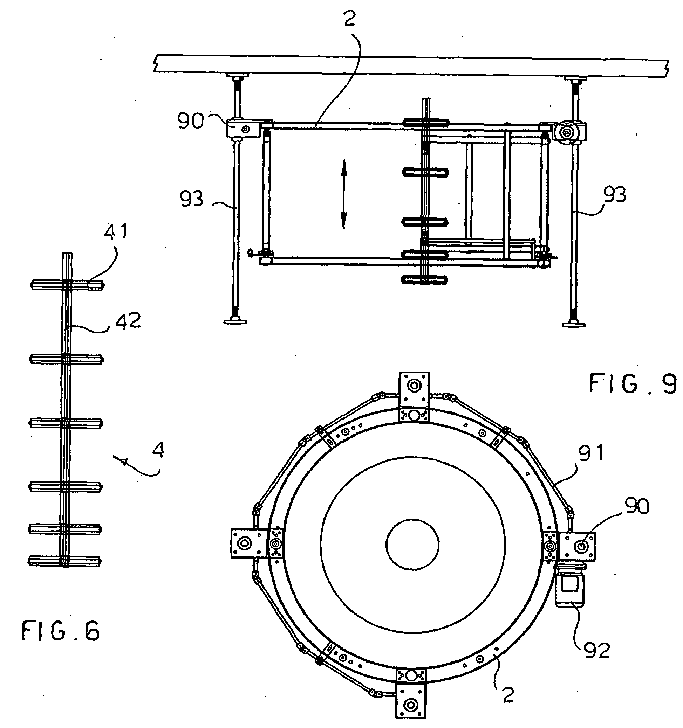

Figure 6 shows diagrammatically an embodiment of the guide means 4, consisting of a plurality of guide members 41 mounted on a support 42 adapted to be mounted by means of reversible fixing means (per se known and omitted in the figures for the sake of simplicity of the graphic representation) to the flap-like body 31 of a mobile arm 3.

The guide means 4 are interchangeable and - thanks to the reversible fixing means - can be replaced simply and quickly, allowing the guide members 41 (not described here because they are per se known) best suitable for the specific application to be used on a case-by-case basis.

Figures 7 and 8 show diagrammatically a top view of a bubble guide 1 bearing six mobile arms 3 in a retracted position (Figure 7) and in an extended position (Figure 8), respectively, each of said mobile arms 3 bearing the guide means 4.

The mobile arms 3 are made to rotate simultaneously with respect to the supporting structure 2 by a lever system (comprising the rods 70 driven by the means 71) not further described because it can be realised by a person skilled in the art without involving an inventive step.

For the sake of simplicity of the graphic representation, in Figures 7 and 8 only one of the mobile arms 3, of the guide means 4 and of the rods 70 have been designated with the relative reference numerals.

Figure 9 shows diagrammatically a top view and a side view of the means for moving the bubble guide 1 vertically.

As is known to the persons skilled in the art, it is important to be able to move the bubble guide vertically (that is, parallel to the axis of the bubble of extruded film) to adapt its position to specific requirements, leaving as free as possible the area where the extruded film crystallises.

The bubble guides of the prior art therefore comprise a vertical adjustment system, consisting of a rather cumbersome structure comprising trapezoidal screws set in rotation by a chain; the mobile parts (trapezoidal screws and chain) must normally be covered by guard members.

The means for vertically moving the bubble guide 1 of the present invention comprise a plurality of screw jacks 90, fixed to the upper ring of the supporting structure 2, which move along the trapezoidal screws 93.

The trapezoidal screws 93 are static and the transmission of the movement between the motor 92 and the screw jacks 90 takes place by means of the mechanical shafts 91.

The means for moving the bubble guide 1 vertically are therefore much simpler and less cumbersome than the means for vertically moving the bubble guides of the prior art.

The herein disclosed bubble guide constitutes a guide system for the bubble of extruded film that is independent from the mechanics of the diameter adjustment movement, making it possible to use different guide methods without problems, choosing the most suitable one for guiding the different films produced on a case-by-case basis, taking into account the polymers used, the extrusion speed, the film temperature etc.

## Claims

1. A guide device (1) for tubular plastic films produced by blown extrusion, comprising a supporting structure (2) to which is hinged one end of a plurality of mobile arms (3), whose other end, held in contact with the bubble of extruded film, carries guide means (4) for said bubble, wherein each mobile arm (3) consists of an articulated quadrilateral and comprises at least
- one quadrangular body (31) having one side hinged flap-like to the supporting structure (2),
- a tie rod (32) having one end hinged to the supporting structure (2) and
- a member (33), hinged to the other end of the tie rod (32) and to the side of the body (31) opposite that hinged to the supporting structure (2), which carries the guide means (4), **the position of said guide means (4) being adjustable simultaneously by moving the flap-like body (31)**
the quadrangular body (31) having a height corresponding to that of the supporting structure (2), the mobile arm (3) is arranged to move the guide means (4) parallel to themselves, always keeping them tangential to the bubble of extruded film,
**wherein the connecting means (34) that connect the tie rod (32) to the member (33) is arranged to describe an arc of a circle (C) passing through the positions occupied by said means (34) when the guide means (4) are tangential to a bubble of extruded film having, respectively, the maximum, medium and minimum diameter foreseen for said bubble, the circle (C) having as its centre the end of the tie rod (32) hinged to the supporting structure (2).**

2. A device (1) as in claim 1, **characterised in that** each mobile arm (3) further comprises means for a fine adjustment of the position of the guide means (4) with respect to the bubble of extruded film.

3. A device (1) as in claim 1, **characterised in that** the guide means (4) carried by the mobile arms (3) are interchangeable.

4. A device (1) as in claim 1, **characterised in that** the guide means (4) consist of a plurality of guide members (41) mounted on a support (42) adapted to be mounted by means of reversible fixing means to the flap-like body (31) of a mobile arm (3).

## Patentansprüche

1. Führungsvorrichtung (1) für röhrenförmige Kunststofffolien, die durch eine Blasextrusion hergestellt werden, wobei die Führungsvorrichtung eine Trägerstruktur (2) umfasst, an der ein Ende von mehreren beweglichen Armen (3) drehbar angebracht ist, deren anderes Ende, das im Kontakt mit der Blase einer extrudierten Folie gehalten wird, Führungsmittel (4) für die Blase trägt, wobei jeder bewegliche Arm (3) aus einem gelenkigen Viereck besteht und mindestens umfasst:
- einen viereckigen Körper (31) mit einer Seite, die klappenähnlich an der Trägerstruktur (2) drehbar angebracht ist,
- eine Gelenkstange (32) mit einem Ende, das an der Trägerstruktur (2) drehbar angebracht ist, und
- ein Element (33), das an dem anderen Ende der Gelenkstange (32) und gegenüber der Seite des Körpers (31) drehbar angebracht ist, die an der Trägerstruktur (2), die die Führungsmittel (4) trägt, drehbar angebracht ist, wobei die Position der Führungsmittel (4) durch ein Bewegen des klappenähnlichen Körpers (31) gleichzeitig anpassbar ist,
wobei der viereckige Körper (31) eine Höhe aufweist, die der der Trägerstruktur (2) entspricht, wobei der bewegliche Arm (3) angeordnet ist, um die Führungsmittel (4) parallel zu sich selbst zu bewegen, wobei sie immer tangential zu der Blase der extrudierten Folie gehalten werden,
wobei die Verbindungsmittel (34), die die Gelenkstange (32) mit dem Element (33) verbinden, angeordnet sind, um einen Bogen oder einen Kreis (C), der die Positionen, die von den Mitteln (34) belegt werden, durchläuft, wenn die Führungsmittel (4) tangential zu einer Blase einer extrudierten Folie sind, wobei sie jeweils den maximalen, einen mittleren und den minimalen Durchmesser, der für die Blase vorausgesehen wird, aufweisen, wobei der Kreis (C) als seinen Mittelpunkt das Ende der Gelenkstange (32), das an der Trägerstruktur (2) drehbar angebracht ist, aufweist.

2. Vorrichtung (1) nach Anspruch 1, **dadurch gekennzeichnet, dass** jeder beweglich Arm (3) ferner Mittel für eine Feinanpassung der Position der Führungsmittel (4) in Bezug auf die Blase einer extrudierten Folie umfasst.

3. Vorrichtung (1) nach Anspruch 1, **dadurch gekennzeichnet, dass** die Führungsmittel (4), die von den beweglichen Armen (3) getragen werden, austauschbar sind.

4. Vorrichtung (1) nach Anspruch 1, **dadurch gekennzeichnet, dass** die Führungsmittel (4) aus mehreren Führungselementen (41) bestehen, die auf einem Träger (42) befestigt sind, der dafür ausgelegt ist, mittels reversibler Befestigungsmittel an dem klappenähnlichen Körper (31) eines beweglichen Arms (3) befestigt zu werden.

## Revendications

1. Dispositif de guide (1) pour films plastiques tubulaires produits par extrusion-soufflage, comprenant une structure de support (2) sur laquelle est articulée une pluralité de bras mobiles (3) dont l'autre extrémité, maintenue en contact avec la bulle de film extrudé, porte un moyen de guide (4) pour ladite bulle, dans lequel chaque bras mobile (3) consiste en un quadrilatéral articulé et comprend au moins
- un corps quadrangulaire (31) présentant un côté articulé de façon semblable à un volet à la structure de support (2),
- une barre de liaison (32) présentant une extrémité articulée sur la structure de support (2) et
- un élément (33), articulé sur l'autre extrémité de la barre de liaison (32) et sur le côté du corps (31) opposé qui est articulé sur la structure de support (2), qui porte le moyen de guide (4), la position dudit moyen de guide (4) pouvant être ajustée simultanément en déplaçant le corps semblable à un volet (31),
le corps quadrangulaire (31) ayant une hauteur correspondant à celle de la structure de support (2), le bras mobile (3) étant agencé pour déplacer le moyen de guide (4) parallèlement à lui-même, en le gardant toujours tangentiel à la bulle de film extrudé, dans lequel le moyen de connexion (34) qui connecte la barre de liaison (32) à l'élément (33) est agencé pour décrire un arc de cercle (C) passant à travers les positions occupées par le moyen (34) lorsque le moyen de guide (4) est tangentiel à une bulle de film extrudé, ayant, respectivement, le diamètre maximal, moyen et minimal prévu pour ladite bulle, le cercle (C) ayant en tant que son centre, l'extrémité de la barre de liaison (32) articulée sur la structure de support (2).

2. Dispositif (1) selon la revendication 1, **caractérisé en ce que** chaque bras mobile (3) comprend en outre un moyen pour un ajustement fin de la position du moyen de guide (4) par rapport à la bulle de film extrudé.

3. Dispositif (1) selon la revendication 1, **caractérisé en ce que** le moyen de guide (4) porté par les bras mobiles (3) est interchangeable.

4. Dispositif (1) selon la revendication 1, **caractérisé en ce que** le moyen de guide (4) consiste en une pluralité d'éléments de guide (41) montés sur un support (42) adapté pour être monté sur le corps (31) semblable à un volet d'un bras mobile (3), au moyen d'un moyen de fixation réversible.
